# EUROPEAN PATENT APPLICATION

(11) **EP 4 249 671 A1**
(43) Date of publication of application: **27.09.2023**
(21) Application number: 21894594.7
(22) Date of filing: 15.11.2021
(51) Int. Cl.: D06N 3/14, B32B 5/00, B32B 27/12, B32B 27/40

(54) **LEATHER-LIKE SHEET, BACKPACK USING SAME AS BACK SURFACE MATERIAL**

(30) Priority: 17.11.2020 JP 2020191164
(71) Applicant: Kuraray Co., Ltd., Kurashiki-shi, Okayama 710-0801 (JP)
(72) Inventor: ASHIDA, Tetsuya, Osaka-shi, Osaka 530-8611 (JP); HARA, Kansai, Osaka-shi, Osaka 530-8611 (JP)
(74) Representative: Vossius & Partner Patentanwälte Rechtsanwälte mbB
(86) International application number: PCT/JP2021/041913
(87) International publication number: WO 2022/107720

(57) **Abstract**

Disclosed is a leather-like sheet including a fiber base material and a colored resin layer laminated on the fiber base material, wherein the colored resin layer includes an intermediate layer and a skin layer laminated on the intermediate layer, wherein the skin layer is a layer containing polyurethane and a black pigment of 3g/m² or more, and the intermediate layer is a layer containing polyurethane and a black pigment, and in the L*a*b* color system, a leather-like sheet having a lightness value of L*≦30 is used.

## Description

### [Technical Field]

The present invention relates to leather-like sheets excellent in detectability by LIDAR (Laser Imaging Detection and Ranging) and backpacks using the leather-like sheet as a back surface material.

### [Background Art]

LIDAR is known, which is a technique for measuring a distance and direction to an object by irradiating a laser beam such as near-infrared rays and measuring the time until the laser beam hits the object and returns back. The technique is also referred to as LiDAR (Light Detection and Ranging), and is hereinafter referred to as LIDAR.

In recent years, with increasing demand for autonomous driving technology for automobiles, research and development have been accelerated to raise the detection sensitivity of LIDAR sensors used in LIDAR as a safety device. An object of adopting the LIDAR sensor for autonomous driving technology for automobiles is to prevent traffic accidents by detecting vehicles, people, objects, or the like around a driving automobile in advance and reflecting them to driving situations.

Pulsed laser beams, which are near-infrared rays of from 905 to 1600nm, are commonly used in LIDAR sensors that have been adopted for autonomous driving technology in automobiles. Since such pulsed laser beams have high reflectivity, the accuracy in measuring the distance is excellent.

By the way, leather-like sheets like an artificial leather having a grain-like resin layer are used as materials for bags, clothing, shoes, or the like. The resin layer of the leather-like sheet is typically used after being colored. Among them, leather-like sheets having a grain-like resin layer colored black are most widely used.

For example, PTL 1 listed below discloses synthetic leathers comprising a base material layer, a resin layer provided on the base material layer, and an outermost layer provided on the resin layer, wherein the resin layer contains hygroscopic fine particles and an infrared-reflective pigment, and the outermost layer contains hygroscopic fine particles of 0.2 g/m² or more and 1 g/m² or less. Further, PTL 1 discloses that such synthetic leathers hardly become hot under sunlight even in black or dark colors due to containing the infrared-reflective pigment in the resin layer, and moreover, have excellent fade resistance since it is provided with the outermost layer on the resin layer. In addition, PTL 1 discloses that the infrared-reflective pigment has an average reflectance of 20% or more in the near-infrared region of 780-1800nm and an average absorptance of 70% or more in the visible-light region of from 400 to 760nm.

Further, with regard to infrared-reflective pigments, PTL 2 listed below discloses a method for producing near infrared-reflective black pigments, in which at least a calcium compound, a titanium compound, and a manganese compound are mixed by a wet grinding method and calcined at a temperature higher than 1100 °C(degree Celsius), wherein the near infrared-reflective black pigments have a perovskite phase as a main phase and a BET specific surface area of 1.0 m²/g or more and less than 3.0 m²/g.

Further, PTL 3 listed below discloses artificial leathers with a black grain-surface layer, characterized in that a resin layer is an upper layer mainly containing polyurethane having a thickness of from 30 to 100µm and containing perylene black in an amount of 2% or more based on the weight of the resin, and a resin layer mainly containing polyurethane and containing carbon black is laminated as a lower layer.

### [Citation List]

### [Patent Literature]

[PTL 1] Japanese Laid-Open Patent Publication No. 2015-168907
[PTL 2] Japanese Laid-Open Patent Publication No. 2016-20549
[PTL 3] Japanese Laid-Open Patent Publication No. H9-59882

### [Summary of Invention]

### [Technical Problem]

In LIDAR sensors, which are being used in autonomous driving technique, there is a problem of low detection sensitivity to black objects. This is because the pulsed laser beams from 905 to 1600nm used by LIDAR sensors for measuring distance are absorbed by carbon black, which is widely used as a black pigment for black objects, and as a result, the reflected beam becomes weaker and is less likely to be detected.

The present inventors have found that a leather-like sheet having a black-colored grain-like resin layer, which is worn on or held by a person, is less likely to be detected by a LIDAR sensor and the presence of the person hidden by the leather-like sheet cannot be detected. The present inventors have diligently studied a technology to improve safety, and as a result, come up with the present invention.

That is, the object of the present invention is to provide a dark-colored leather-like sheet that can be easily detected by LIDAR sensors.

### [Solution to Problem]

An aspect of the present invention is directed to a leather-like sheet comprising a fiber base material and a colored resin layer laminated on the fiber base material, wherein the colored resin layer comprises an intermediate layer and a skin layer laminated on the intermediate layer, the skin layer is a layer containing polyurethane and 3 g/m² or more of an infrared-reflective black pigment, the intermediate layer is a layer containing polyurethane and a black pigment, and the leather-like sheet has a surface having a lightness value of L*≦ 30 in the L*a*b* color system. The leather-like sheet comprises the skin layer containing 3 g/m² or more of the infrared-reflective black pigment having a high reflectance of near-infrared rays, and thus it becomes a leather-like sheet having a black skin layer that is easily detected by LIDAR sensors that emits a pulsed laser beam from 905 to 1600nm. However, the skin layer colored with only the infrared-reflective black pigment has low blackness, and it is difficult to obtain a leather-like sheet having high blackness. When carbon black is added to the skin layer in order to increase the blackness, the reflectance of near-infrared rays is significantly reduced. In such cases, by adding a black pigment to the intermediate layer, it is possible to obtain a leather-like sheet having a darkly colored surface having a higher degree of blackness such as L* ≦30.

Further, it is preferable that the reflectance with respect to a near-infrared ray of the wavelength of 905nm is 10% or more, and a reflectance with respect to a near-infrared ray of the wavelength of 1550nm is 10% or more from the viewpoint of being easily detected by near-infrared rays in the wide wavelength range of LIDAR sensors.

Further, it is preferable that the solar reflectance in the wavelength-range from 250 to 2500nm is 10% or more on the average from the viewpoint that the leather-like sheet having good color developability is easily obtained because the reflectance with respect to near-infrared rays is high and the reflectance in the visible-light range is also high.

Further, it is preferable that the infrared-reflective black pigment has a reflectance of 25% or more with respect to a near-infrared ray of the wavelength of 905nm, a reflectance of 50% or more with respect to a near-infrared ray of the wavelength of 1550nm, and a transmittance of less than 50% with respect to a near-infrared ray of the wavelength of 905nm, or the infrared-reflective black pigment is a titanium-based black pigment of a CaO-TiO₂-MnO₂ base, from the viewpoint that it is easily detected by a wide wavelength range of near-infrared rays of LIDAR sensors.

In addition, it is preferable that the skin layer contains 0 to 0.5 g/m² of carbon black from the viewpoint of not significantly reducing the reflectance of near-infrared rays.

Further, it is preferable that the leather-like sheet has 30 or more of a reflection intensity of the surface, measured at the wavelength of 905nm and the measurement distance 10 m, using a HORIZON manufactured by Livox Technology Company Limited, from the viewpoint that, in the leather-like sheet colored dark such as used for bags or clothing for example, it is easily detected by LIDAR sensors.

### [Advantageous Effects of Invention]

According to the present invention, it is possible to provide a dark colored leather-like sheet that is easily detected by LIDAR sensors.

### [Brief Description of Drawing]

[FIG. 1] FIG. 1 is a schematic cross-sectional view for explaining a layer structure of a grain-like artificial leather according to an embodiment.
[Fig. 2] FIG. 2 is a view for explaining a measuring method of LIDAR sensor reflectance of the leather-like sheet, used in the examples.
[Fig. 3] FIG. 3 is a view showing the results obtained when surface of leather-like sheets obtained in the examples are measured by a LIDAR sensor.

### [Description of Embodiment]

Hereinafter, an embodiment of the leather-like sheet according to the present invention will be described in detail. The leather-like sheet of the present embodiment is a leather-like sheet including a fiber base material and a colored resin layer laminated on the fiber base material, wherein the colored resin layer includes an intermediate layer and a skin layer laminated on the intermediate layer, the skin layer is a layer containing polyurethane and 3 g/m² or more of an infrared-reflective black pigment, the intermediate layer is a layer containing polyurethane and a black pigment, and the leather-like sheet has a surface having a lightness value of L*≦ 30 in the L*a*b* color system.

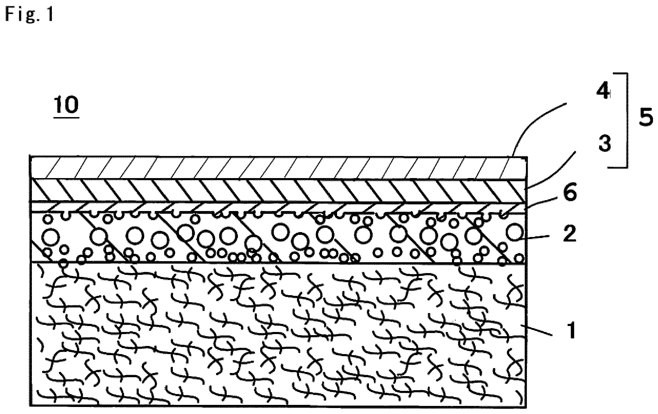

FIG. 1 is a schematic cross-sectional view for explaining a layer structure of a leather-like sheet 10 which is an example of the leather-like sheet of the present embodiment. The leather-like sheet 10 includes a fiber base material 1, a porous layer 2 mainly composed of polyurethane laminated on the fiber base material 1, a colored resin layer 5 including an intermediate layer 3 and a skin layer 4 adhered to the intermediate layer 3, and an adhesive layer 6 mainly composed of polyurethane adhering the porous layer 2 and the colored resin layer 5. The leather-like sheet is not limited to such a layer structure, and the layer structure is not particularly limited as long as it is a leather-like sheet including the fiber base material, and the colored resin layer laminated on the fiber base material and including the intermediate layer and the skin layer as described above. Additionally, as long as the effect of the present invention is not impaired, a clear layer having a thickness of about 1 to 5 pm, which is a colorless transparent resin layer, may be further provided on the surface of the skin layer as necessary.

As the fiber base material, conventionally known artificial leather base materials used in the manufacture of artificial leathers or conventionally known synthetic leather base materials used in synthetic leathers, such as nonwoven fabrics, woven fabrics, knitted fabrics, or base materials impregnated with an elastic polymer (polyurethane, etc.) therein, are used without any particular limitation. In addition, pigments may be blended in the elastic polymer as necessary. The thickness of the fiber base material is not particularly limited, but is preferably, for example, about 0.3 to 3 mm or further 0.5 to 1.5 mm. The type of the fiber forming the fiber base material is not particularly limited, and examples thereof include nylon-based fibers, polyester-based fibers, polyolefin-based fibers, and polyurethane-based fibers.

In addition, a fineness and a form of the fibers are not particularly limited. For example, the fineness may be a regular fiber such as more than 1 dtex, or an ultrafine fiber having a fineness less than 1 dtex. The form of the fibers may be s solid fiber or a fiber having voids such as a hollow fiber or a lotus-root-like fiber.

The skin layer is a polyurethane layer for coloring the surface of the leather-like sheet, containing 3 g/m² or more of an infrared-reflective black pigment.

The skin layer is a polyurethane layer containing 3 g/m² or more of an infrared-reflective black pigment, and thus becomes a colored polyurethane layer having a high reflectance with respect to near-infrared pulsed laser beams as will be described later.

The infrared-reflective black pigment is a black pigment having a reflectance of 25% or more with respect to a near-infrared ray of the wavelength of 905nm, a reflectance of 50% or more with respect to a near-infrared ray of the wavelength of 1550nm, and a transmittance of 50% or less with respect to a near-infrared ray of the wavelength of 905nm. Further, it is preferable that the infrared-reflective black pigment has a reflectance of 30% or more with respect to a near-infrared ray of the wavelength of 905nm, and a transmittance of 30% or less, more preferably 20% or less, and particularly preferably 10% or less with respect to a near-infrared ray of the wavelength of 905nm. Specific examples of such infrared-reflective black pigments include titanium-based black pigments of a CaO-TiO₂-MnO₂ base (for example, TIPAQUE Black SG-103 manufactured by ISHIHARA SANGYO KAISHA, LTD.), titanium-based black pigments (Tilack D) manufactured by AKO KASEI Co., LTD. and complex oxide pigments of chromium oxide and iron oxide. The titanium-based black pigments of a CaO-TiO₂-MnO₂-base have a reflectance of 30% or more with respect to a near-infrared ray of the wavelength of 905nm, a reflectance of 55% or more with respect to a near-infrared ray of the wavelength of 1550nm, and a transmittance of 10% or less with respect to a near-infrared ray of the wavelength of 905nm.

For example, titanium-based black pigments of a CaO-TiO₂-MnO₂ base are produced by mixing a calcium compound, a titanium compound, and a manganese compound by a wet grinding method and calcining the mixture at a temperature higher than 1100°C. Such titanium-based black pigments of a CaO-TiO₂-MnO₂ base preferably have a perovskite phase as a main phase and a BET specific surface area of 1.0 m²/g or more and less than 3.0 m²/g.

The skin layer contains 3 g/m² or more, preferably 3 to 5 g/m² of the infrared-reflective black pigment. When the content of the infrared-reflective black pigment is less than 3 g/m², the reflectance of the leather-like sheet with respect to near-infrared rays is low, and the detectability by LIDAR sensor is lowered. In addition, when the content of the infrared-reflective black pigment is too large, the blackness becomes low, and the cost-efficiency is also lowered.

The thickness of the skin layer is not particularly limited as long as the skin layer contains 3 g/m² or more of an infrared-reflective black pigment, but is preferably 10*µ*m or more, and more preferably from 20 to 30,um. When the skin layer is too thin, the infrared-reflective black pigment tends to be less likely to contain 3 g/m² or more.

The content ratio of the infrared-reflective black pigment in the skin layer is not particularly limited as long as the skin layer contains 3 g/m² or more of the infrared-reflective black pigment, but is preferably 10 mass% or more, more preferably 15 mass% or more, and particularly preferably 20 mass% or more. When the content ratio of the infrared-reflective black pigment is too low, the infrared-reflective black pigment is less likely to be contained in 3 g/m² or more, and when the content ratio is too high, the blackness tends to be low and the cost-efficiency tends to be lowered.

The skin layer does not contain carbon black, or may contain carbon black in a range from 0 to 0.5 g/m², or even from 0 to 0.1 g/m² as long as the effect of the present invention is not impaired and depending on the type of carbon black. When the skin layer contains carbon black exceeding 0.5 g/m², near-infrared rays irradiated on the surface of the obtained leather-like sheet is preferentially absorbed by carbon black, so that the reflectance of near-infrared rays becomes low and the detectability by LIDAR sensors tends to decrease.

The skin layer may contain other pigments other than carbon black as long as the effect of the present invention is not impaired. The other pigments are not particularly limited as long as absorptance of near-infrared rays of the wavelength from 905 to 1600nm is not too high, and specific examples thereof include anthraquinone-based pigments, Diketopyrrolopyrrole-based pigments, and perylene-based pigments such as perylene black.

Note that, for example, since perylene black has a transmittance of 60% or more with respect to a near-infrared ray of the wavelength of 905nm, when used alone, the reflectance of near-infrared rays is low, so that the detectability by LIDAR sensors is low, and the color developability of dark colors is low.

The mean dispersion particle diameter of the infrared-reflective black pigment in the colored resin layer is not particularly limited, but is preferably from 1 to 10µm, more preferably from 1.5 to 8µm. When the mean dispersion particle diameter of the infrared-reflective black pigment is within such a range, irregular reflection of light on the surface of the particles of the infrared-reflective black pigment is easily suppressed, and the colored resin layer having a high blackness tends to be easily formed. When the mean dispersion particle diameter of the infrared-reflective black pigment is too small, light tends to be irregularly reflected on the surface of the particles of the infrared-reflective black pigment, so that the surface of the leather-like sheet tends to develop a reddish color. When the mean dispersion particle diameter of the infrared-reflective black pigment is too large, the mechanical properties of the film of the colored resin layer deteriorate, and the abrasion resistance of the surface of the leather-like sheet tends to be deteriorated.

On the other hand, the intermediate layer is a layer containing polyurethane and a black pigment, and is colored dark.

The intermediate layer is a polyurethane layer which is colored in a dark color by containing a black pigment. The intermediate layer is a layer for adjusting the color visually recognized from the surface of the leather-like sheet to a dark color without blending a large amount of carbon black in the skin layer.

Examples of the black pigment contained in the intermediate layer include carbon black such as furnace black, channel black, and acetylene black; infrared-reflective black pigments; and composite oxide-based black pigments. Among these, carbon black is preferable from the viewpoint that the dark surface is easily obtained. In addition, the infrared-reflective black pigment is preferable from the viewpoint of further increasing the reflectance of near-infrared rays.

Note that the intermediate layer may contain other pigments other than the black pigment for the purpose of arranging colors, as long as the effect of the present invention is not inhibited. Other pigments are not particularly limited, and specific examples thereof include anthraquinone-based pigments, diketopyrrolopyrrole-based pigments, and perylene-based pigments.

When the intermediate layer contains carbon black as a black pigment, it is preferable that the intermediate layer contains carbon black in an amount of 0.2 g/m² or more, more preferably from 0.5 to 5 g/m², from the viewpoint of easily obtaining the leather-like sheet having a dark surface of a L* ≦30. Further, when the intermediate layer contains an infrared-reflective black pigment as a black pigment, it is preferable that the intermediate layer contains an infrared-reflective black pigment in an amount of 2 g/m² or more, more preferably from 2 to 5 g/m², from the viewpoint of easily obtaining the leather-like sheet having a dark surface of a L* ≦30.

The thickness of the intermediate layer is not particularly limited as long as the surface of the leather-like sheet can be adjusted to a surface having a lightness value of L*≦ 30, but is preferably from 10 to 50 *µ*m, and more preferably from 20 to 30 *µ*m. If the intermediate layer is too thin, it tends to be difficult to adjust to a dark color such as L* ≦30.

The content ratio of the black pigment in the intermediate layer is not particularly limited as long as the surface of the leather-like sheet can be adjusted to a surface having a L* ≦30. When the black pigment contains carbon black, the content of carbon black is preferably 2 mass% or more, and more preferably from 2 to 10 mass% in the intermediate layer. When the black pigment contains the infrared-reflective black pigment, the intermediate layer preferably contains 10 mass% or more of the infrared-reflective black pigment, and more preferably from 10 to 20 mass%. When the content ratio of the black pigment is too small, it tends to be difficult to obtain a dark color such as L* ≦30.

The polyurethane for forming the intermediate layer, the skin layer, and the porous layer is obtained by reacting urethane raw material containing a polymer polyol, an organic polyisocyanate, and a chain extender. Polyurethanes are prepared as melts; organic solvent solutions (e.g., solutions in organic solvents such as dimethylformamide, methyl ethyl ketone, acetone, toluene, etc.); aqueous dispersions; or emulsions in the manufacture of the leather-like sheet.

Specific examples of the polymer polyols include polyether-based polyols such as polyethylene glycol, polypropylene glycol, polytetramethylene glycol, and polymethyltetramethylene glycol; polycarbonate-based polyols such as polyhexamethylene carbonate diol, poly(3-methyl-1,5-pentylene carbonate diol, polypentamethylene carbonate diol, and polytetramethylene carbonate diol; polyester-based polyols such as polyethylene adipate diol, polybutylene adipate diol, polypropylene adipate diol, polybutylene sebacate diol, polyhexamethylene adipate diol, poly(3-methyl-1,5-pentylene adipate)diol, poly(3-methyl-1,5-pentylene sebacate)diol, and polycaprolactone diol; or copolymers thereof. These may be used singly or in combination of two or more thereof.

Specific examples of the organic polyisocyanates include hardly yellowing diisocyanates including aromatic diisocyanates such as 2,4-tolylene diisocyanate, 2,6-tolylene diisocyanate, 4,4' -diphenylmethane diisocyanate, and xylylene diisocyanate; and non-yellowing diisocyanates such as aliphatic or alicyclic diisocyanates such as hexamethylene diisocyanate, isophorone diisocyanate, norbornene diisocyanate, and 4,4' -dicyclohexylmethane diisocyanate. Further, if necessary, multi-functional isocyanates such as 3-functional isocyanates and 4-functional isocyanates may be used in combination. These may be used singly or in combination of two or more thereof.

Further, specific examples of the chain extenders include diamines such as hydrazine, ethylenediamine, propylenediamine, hexamethylenediamine, nonamethylenediamine, xylylenediamine, isophoronediamine, piperazine and derivatives thereof, adipic acid dihydrazide, and isophthalic acid dihydrazide; triamines such as diethylenetriamine; diols such as ethylene glycol, propylene glycol, 1,4-butanediol, 1,6-hexanediol, 1,4-bis(β-hydroxyethoxy)benzene, and 1,4-cyclohexanediol; and triols such as trimethylolpropane; tetraols such as pentaerythritol; amino alcohols such as aminoethyl alcohol and aminopropyl alcohol; and the like. These may be used singly or in combination of two or more thereof. Further, in the chain extension reaction, monoamines such as ethylamine, propylamine, and butylamine; carboxyl group-containing monoamine compounds such as 4-aminobutanoic acid and 6-aminohexanoic acid; and monools such as methanol, ethanol, propanol, and butanol may be used in combination with the chain extender.

The polyurethane for forming the porous layer is formed, for example, by applying a solution of the polyurethane to be wet-solidified to the surface of the fiber base material, and then immersing them in an aqueous coagulation bath to solidify the porous polyurethane. In addition, the porous layer may be permeated inside the fiber base material for the purpose of imparting shape stability or the like of the fiber base material. In this case, the polyurethane solution is impregnated into the fiber base material in advance, and additional polyurethane solution is coated onto it, and then, the material is immersed in an aqueous coagulation bath to coagulate the polyurethane, whereby the porous polyurethane can also be imparted inside the fiber base material. The thickness of the porous layer is not particularly limited, but is preferably, for example, about 100 to 600µm, or more preferably from 200 to 400µm.

In order to form the intermediate layer and the skin layer on the surface of the porous layer, for example, a method using the following dry surface forming method is exemplified.

A polyurethane film for forming the skin layer is formed on a release paper. Then, by forming a polyurethane film for forming the intermediate layer on the polyurethane film of the skin layer, the colored resin layer including the intermediate layer and the skin layer laminated on the intermediate layer is formed. The colored resin layer may further include a layer other than the intermediate layer in a layer below the skin layer.

Then, an adhesive is applied to the colored resin layer, and the solvent is completely or incompletely removed and dried. Then, the adhesive laminated on the colored resin layer formed on the release paper is bonded to the surface of the porous layer and pressed, and then the porous layer and the colored resin layer are bonded to each other via the adhesive layer by curing the adhesive. Then, by peeling the release paper from the surface of the colored resin layer, a leather-like sheet including the fiber base material and the colored resin layer laminated on the fiber base material is obtained.

In the leather-like sheet of the present embodiment, the leather-like sheet is colored so as to have a surface of a value of L* ≦30 in L*a*b* color system by the colored resin layer including the skin layer containing the infrared-reflective black pigment and the intermediate layer containing the black pigment as described above.

In L*a*b* color system, colored so as to have a surface having a lightness value of L*≦ 30 means that a lightness value, calculated from a coordinate value of a L*a*b* color system obtained by measuring a dark colored surface which is a design surface of a leather-like sheet, using a spectrophotometer, is satisfied a value of L*≦ 30. The lightness of the dark colored surface is preferably L* ≦ 30, and more preferably L* ≦25.

The leather-like sheet of the present embodiment includes the skin layer containing an infrared-reflective black pigment as described above, whereby a leather-like sheet having a high reflectance to near-infrared rays can be obtained. Accordingly, the leather-like sheet colored dark that is easily detectable by LIDAR sensor is obtained.

The reflectance of the surface having a lightness value of L*≦ 30 of the leather-like sheet with respect to near-infrared rays is preferably 10% or more, more preferably 15% or more, with respect to a near-infrared ray of the wavelength of 905nm. Further, the reflectance of the surface is preferably 10% or more, more preferably 15% or more with respect to a near-infrared ray of the wavelength of 1550nm.

The solar reflectance in the wavelength-range from 250 to 2500 nm of the surface of the leather-like sheet is preferably 10% or more, more preferably 15% or more. When the solar reflectance is within such a range, it is preferable from the viewpoint that a leather-like sheet with good color developability having a lightness value of L* ≦30 is more easily obtained in addition to a high reflectance with respect to near-infrared rays.

The leather-like sheet of the present embodiment described above is preferably used as a grain-like leather-like sheet imitating to natural leather, which can used as a skin material for bags, clothing, shoes, and the like. In particular, when used, for example, as a backpack such as a Randoseru using the leather-like sheet as a back surface material, or as a material for clothing, that covers large areas of the wearer's body, it is preferably used as a grain-like leather-like sheet detected by LIDAR sensors with high accuracy even if large areas of the body are covered by the grain-like leather-like sheet.

In particular, when a child with a small body wears a Randoseru, most of the body may be hidden by the Randoseru. In such cases, a child wearing a Randoseru that is not easily detected by a LIDAR sensor is less likely to be noticed by a vehicle equipped with a LIDAR sensor. According to the backpack of the present embodiment, since the back surface material is easily detected in the vehicle provided with the LIDAR sensor, it is possible to reduce the possibility of traffic accidents of children during school commuting.

Such a leather-like sheet is preferable that the leather-like sheet has a reflection intensity of 40 or more, or even 50 or more, measured at the wavelength of 905nm, the measurement distance 10 m and from the skin layer side using a LIDAR sensor, for example, HORIZON manufactured by Livox Technology Company Limited, from the viewpoint the leather-like sheet is easily detected by a LIDAR sensor mounted on a vehicle as a safety device.

### [EXAMPLES]

Hereinafter, the present invention will be described in more detail with reference to Examples. The scope of the present invention is not limited to these examples.

### [Example 1]

Island-in-the-sea composite fibers containing 45 parts by mass of 6-nylon (sea component) and 55 parts by mass of polystyrene (island component) were melt-spun, and they were drawn to 3 times, applied an oil agent for fiber, and then, after mechanical crimping, dried. The resulting crimped fibers were cut into 51 mm to form a staple of 3 dtex and a web was formed. Then, needle punching was performed alternately from both sides of the web in total about 500 punches/cm² to obtain an entangled nonwoven fabric. The basis weight of this entangled nonwoven was 350 g/m² and the apparent specific gravity was 0.17. The entangled nonwoven fabric was treated with a 4% aqueous solution of polyvinyl alcohol, compressed and fixed to a thickness of about 1.3mm, and smoothed the surface thereof by buffing. Then, a 13% solution of polyurethane mainly composed of polyester-based polyurethan in dimethylformamide (hereinafter referred to as DMF) was impregnated into it. Then, after applying the same polyurethane solution to the surface at a solid content of 100 g/m², the polyurethane was made porous by wet-solidification through immersion in a mixed liquid of DMF/ water. Then, the island components were eluted and eliminated in hot toluene to convert the island-in-the-sea composite fibers into hollow fibers. In this way, a fiber base material on which the porous layer immersed into the surface of the entangled nonwoven fabric was laminated was obtained. The thickness of the porous layer was 300µm.

Next, on a release paper (R-70 manufactured by LINTEC Corporation), 100 g/m² of a polyurethane composition solution, which contains 100 parts by mass of a 22% DMF solution of a non-yellowing polycarbonate-based polyurethane, 30 parts by mass of a black vehicle containing 20 mass% of an infrared-reflective black pigment (titanium-based black pigment), and 30 parts by mass of DMF, is coated so as to be a thickness of about 20 *µ*m after drying, them, drying at 120°C for 2 minutes, a skin layer colored black was formed. The titanium-based black pigment was the TIPAQUE Black SG 103 manufactured by ISHIHARA SANGYO KAISHA, LTD., which is a CaO-TiO₂-MnO₂ based black pigment having a 30.1% of reflectance with respect to 905nm, a 57.1% of reflectance with respect to 1550nm, and a 10% or less of transmittance with respect to a near-infrared ray of the wavelength of 905nm. The obtained skin layer did not contain carbon black, and the content of the titanium-based black pigment contained in the skin layer was 4.8 g/m². The content ratio of the titanium-based black pigment in the skin layer was 20 mass%.

Then, on the skin layer, 120 g/m² of a polyurethane composition solution containing 100 parts by mass of 30% DMF solution of a hardly yellowing polyether-based polyurethane, 20 parts by mass of a black vehicle containing 5% by mass of carbon black (furnace black), and 30 parts by mass of DMF and 30 parts by mass of MEK was coated so as to be a thickness of about 20 µm after drying, and dried at 120° C. for 2 minutes to form an intermediate layer colored black. The furnace black has an about 5% of reflectance with respect to 905nm, an about 6% of reflectance with respect to 1550nm, and a 5% or less of transmittance with respect to the near-infrared ray of the wavelength of 905nm. The amounts of carbon black per unit area of the resulting intermediate layer were 0.6 g/m². The content ratio of carbon black in the intermediate layer was 3 mass%.

Then, a polyurethane-based adhesive solution was coated with 110 g/m² on the intermediate layer formed on the release paper, and dried at 120° C for 2 minutes to evaporate the solvent, thereby forming an adhesive layer. Then, the adhesive layer on the release paper was bonded to the porous layer laminated on the fiber base material to produce a laminated intermediate. Then, the laminated intermediate was pressed by pressing with a roll having a surface temperature of 75 °C with a clearance. Then, after an aging treatment at 50 °C for 3 days, the release paper was peeled off to obtain a leather-like sheet that was a grain-like artificial leather with a black surface.

The obtained leather-like sheet was evaluated as follows.

### (Measurement of L* value)

The coordinates of the L*a*b* color system on the surface of the leather-like sheet were measured with a spectrophotometer (CM-3700, manufactured by Minolta Co., Ltd.) to calculate the L* value. The number of samples was N=3, and the average value thereof was calculated.

### (Reflectance, Transmittance)

The reflectance of the surface of the leather-like sheet was determined by measuring the reflectance spectrum of the wavelength-range from 250nm to 2500nm using a spectrophotometer (V-770 spectrophotometer, a type of ISN-923 integrating sphere manufactured by JASCO Co., Ltd.) and reading the reflectance of 905nm and 1550nm. The mean reflectance of all range up to the wavelength- range from 250nm to 2500nm was calculated as the solar reflectance. Further, the reflectance and transmittance of the titanium-based black pigment were measured using an ultraviolet-visible near-infrared spectrophotometer (V-670 manufactured by NIPPON DENSHOKU INDUSTRIES CO., LTD.) by placing the sample as a powder in a measuring cell and measuring the spectral reflectance and transmittance of in the range of from 300nm to 2500nm.

### (LIDAR sensor reflectance)

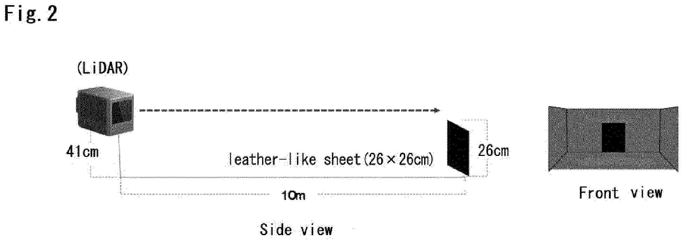

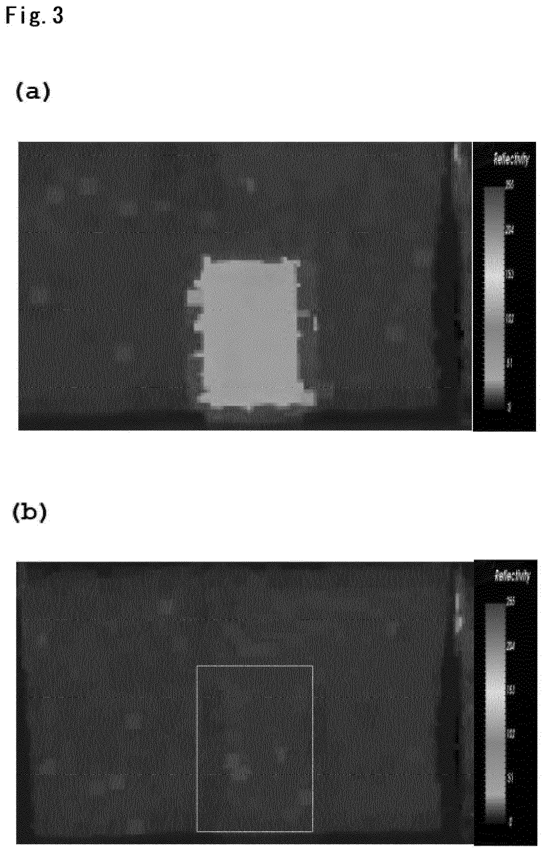

As shown in FIG. 2, a leather-like sheet of 26cm×26cm was vertically placed in a frame surrounded by black cardboard. A HORIZON manufactured by Livox Technology Company Limited was installed at 10m of the position as the measuring distance so that the emission light portion was at the height of 41cm, and irradiated with laser having the wavelength of 905nm. Then, the reflection intensity was measured by a method in which the energy when the laser beam was reflected from the object was expressed by a numerical value within a range of 0 (total absorption) to 255 (total reflection). FIG. 3 is a view showing the reflectance of the near-infrared ray on the surface of leather-like sheets measured by a LIDAR sensor. (A) is a view obtained by measuring the surface of the leather-like sheet of Example 1, (b) is by measuring the surface of the leather-like sheet of Comparative Example 1.

### (Mean Dispersion Particle Diameter)

Using a scanning electron microscope (JSM-IT500 manufactured by JEOL Ltd.), SEM photographs of 2000 times the thickness cross section of the colored resin-layer of the test piece cut out from the leather-like sheet was taken. Then, the particle diameters Rn of n particles of all infrared-reflective black pigments observed in any 2500 µm² area were measured. Note that the longest portion of the observed infrared-reflective black pigment was defined as the particle diameter. In the case where a plurality of particles aggregates to form secondary particles, the longest portion as the secondary particles was defined as the particle diameter. In addition, when a plurality of types of black pigment particles are present in SEM photographing area, qualitative analyses by EDS elemental analyses were performed in advance in SEM photographing area to determine the infrared-reflective black pigment to be measured for the particle diameter.

Then, the respective volume Vn were calculated from the obtained particle diameters Rn of n particles by the following equation. Note that the respective volume Vn are calculated as spherical shapes.

Volume of the particles of the infrared-reflective black pigment: Vn=4/3×π×(Rn/2)³

Then, the obtained volumes Vn of n particles were arranged in ascending order of the particle diameter Rn to calculate a cumulative sum to obtain a volume cumulative frequency. The cumulative volume frequency was plotted against the particle diameter Rn, and the particle diameter when the cumulative volume frequency was 50% was defined as the dispersed particle diameter (D50). The above measurement was performed at any five points of the leather-like sheet, and the mean of the dispersed particle diameters (D50) at the five points was defined as the mean dispersed particle diameter.

The above results are shown in Table 1 below.

**[Table 1]**

| Example No. | | Ex.1 | Ex. 2 | Ex. 3 | Ex. 4 | Com. Ex. 1 | Com. Ex. 2 | Com. Ex. 3 | Com. Ex. 4 | Com. Ex. 5 | Com. Ex. 6 | Com. Ex. 7 | Com. Ex. 8 |
|---|---|---|---|---|---|---|---|---|---|---|---|---|---|
| Skin layer | Content amount of Infrared-reflective black pigment (g/m 2) | 4.8 | 3.4 | 4.8 | 4.8 | 0 | 4.8 | 1.9 | 2.9 | 4.8 | 0 | 0 | 0 |
| | Content amount of Perylene-based black pigment (g/m ²) | 0 | 0 | 0 | 0 | 0 | 0 | 0 | 0 | 0 | 0 | 4.8 | 4.8 |
| | Content amount of Carbon black (g/m²) | 0 | 0 | 0 | 0.5 | 3.4 | 0 | 0 | 1.9 | 0.6 | 0.6 | 0 | 0 |
| | Content ratio of Infrared-reflective black pigment (mass%) | 20 | 14 | 20 | 20 | 0 | 20 | 8 | 12 | 20 | 0 | 0 | 0 |
| | Content ratio of Perylene-based black pigment (mass%) | 0 | 0 | 0 | 0 | 0 | 0 | 0 | 0 | 0 | 0 | 20 | 20 |
| | Content ratio of Carbon black (mass%) | 0 | 0 | 0 | 2 | 14 | 0 | 0 | 8 | 3 | 3 | 0 | 0 |
| | thickness (um) | 20 | 20 | 20 | 20 | 20 | 20 | 20 | 20 | 20 | 20 | 20 | 20 |
| Intermediate layer | Content amount of Carbon black (g/m²) | 0.6 | 0.6 | 0 | 0 | 0.6 | 0 | 0.6 | 0.6 | 0 | 0 | 0.6 | 0 |
| | Content amount of Infrared-reflective black pigment (g/m 2) | 0 | 0 | 3.4 | 3.4 | 0 | 0 | 0 | 1.8 | 0 | 4.8 | 0 | 3.4 |
| | Content ratio of Carbon black (mass%) | 3 | 3 | 0 | 0 | 3 | 0 | 3 | 3 | 0 | 0 | 3 | 0 |
| | Content ratio of Infrared reflective black pigment (mass%) | 0 | 0 | 14 | 14 | 0 | 0 | 0 | 9 | 0 | 20 | 0 | 14 |
| | thickness (um) | 20 | 20 | 20 | 20 | 20 | 20 | 20 | 20 | 20 | 20 | 20 | 20 |
| Total content amount of Infrared reflective black pigment (g/m ²) | | 4.8 | 3.4 | 8.2 | 8.2 | 0.0 | 4.8 | 1.9 | 4.7 | 4.8 | 4.8 | 0 | 3.4 |
| Total content amount of Perylene-based black pigment (g/m ²) | | 0 | 0 | 0 | 0 | 0 | 0 | 0 | 0 | 0 | 0 | 4.8 | 4.8 |
| Total content amount of Carbon black (g/m ²) | | 0.6 | 0.6 | 0 | 0.0 | 4.0 | 0 | 0.6 | 2.5 | 0.6 | 0.6 | 0.6 | 0.0 |
| Mean Dispersion Particle Diameter of Infrared reflective black pigment (µm) | | 1.2 | 1.2 | 1.2 | 1.2 | - | 1.2 | 1.2 | 1.2 | 1.2 | 1.2 | - | 1.2 |
| Value of L* | | 24.0 | 24.3 | 24.7 | 23.5 | 22.1 | 34.0 | 24.0 | 22.3 | 23.0 | 24.8 | 28.6 | 35.0 |
| Reflectance (%) | 905nm | 18 | 14 | 25 | 10 | 4 | 23 | 10 | 5 | 7 | 4 | 4 | 20 |
| | 1550nm | 22 | 18 | 44 | 11 | 4 | 40 | 10 | 5 | 7 | 4 | 4 | 35 |
| | 250 to 2500nm (Solar reflectance) | 16 | 12 | 30 | 11 | 4 | 30 | 8 | 5 | 7 | 4 | 4 | 28 |
| LIDAR sensor reflectance (No unit) | | 60 | 50 | 100 | 40 | 10 | 100 | 30 | 10 | 10 | 10 | 10 | 80 |

### [Example 2]

In Example 1, artificial leather was obtained and evaluated in the same manner as in Example 1, except that the skin layer containing 4.8 g/m² of the infrared-reflective black pigment was changed to the skin layer containing 3.4 g/m² of the infrared-reflective black pigment. The results are shown in Table 1.

### [Example 3]

In Example 1, an artificial leather was obtained and evaluated in the same manner as in Example 1, except that the intermediate layer containing 0.6 g/m² of carbon black was changed to the intermediate layer containing 3.4 g/m² of the infrared-reflective black pigment. The results are shown in Table 1.

### [Example 4]

In Example 3, an artificial leather was obtained and evaluated in the same manner as in Example 1, except that the skin layer containing 4.8 g/m² of the infrared-reflective black pigment were changed to the skin layer containing 4.8 g/m² of the infrared-reflective black pigment and 0.5 g/m² of carbon black. The results are shown in Table 1.

### [Comparative Example 1]

In Example 1, an artificial leather was obtained and evaluated in the same manner as in Example 1, except that the skin layer containing 4.8 g/m² of the infrared-reflective black pigment was changed to the skin layer containing 3.4 g/m² of carbon black to adjust the similar lightness of the black. The results are shown in Table 1.

### [Comparative Example 2]

In Example 1, an artificial leather was obtained and evaluated in the same manner as in Example 1, except that the intermediate layer containing 0.6 g/m² of carbon black was changed to the intermediate layer containing no pigments. The results are shown in Table 1.

### [Comparative Example 3]

In Example 1, an artificial leather was obtained and evaluated in the same manner as in Example 1, except that the skin layer containing 4.8 g/m² of the infrared-reflective black pigment was changed to the skin layer containing 1.9 g/m² of the infrared-reflective black pigment and 1.9 g/m² of carbon black. The results are shown in Table 1.

### [Comparative Example 4]

In Example 1, an artificial leather was obtained and evaluated in the same manner as in Example 1, except that the skin layer containing 4.8 g/m² of the infrared-reflective black pigment was changed to the skin layer containing 2.9 g/m² of the infrared-reflective black pigment and 1.9 g/m² of carbon black. The results are shown in Table 1.

### [Comparative Example 5]

In Example 1, an artificial leather was obtained and evaluated in the same manner as in Example 1, except that the skin layer containing 4.8 g/m² of the infrared reflective black pigment was changed to the skin layer containing 4.8 g/m² of the infrared-reflective black pigment and 0.6 g/m² of carbon black, and the intermediate layer containing 0.6 g/m² of carbon black was changed to the intermediate layer containing no pigment. The results are shown in Table 1.

### [Comparative Example 6]

In Example 1, an artificial leather was obtained and evaluated in the same manner as in Example 1 except that a change was made to replace the skin layer and the intermediate layer. The results are shown in Table 1.

### [Comparative Example 7]

In Example 1, an artificial leather was obtained and evaluated in the same manner as in Example 1, except that the skin layer containing 4.8 g/m² of the infrared-reflective black pigment was changed to the skin layer containing 4.8 g/m² of perylene-based black pigment. As the perylene-based black pigment, perylene black (Paliogen Black L0084) having a transmittance of 65% or more with respect to a near-infrared ray of the wavelength of 905nm was used. The results are shown in Table 1.

### [Comparative Example 8]

In Example 3, an artificial leather was obtained and evaluated in the same manner as in Example 1, except that the skin layer containing 4.8 g/m² of the infrared-reflective black pigment was changed to the skin layer containing 4.8 g/m² of perylene black (Paliogen Black L0084). The results are shown in Table 1.

Referring to Table 1, each of the leather-like sheets, which is the artificial leather in Examples 1 to 4, in which the skin layer contains 3 g/m² or more of an infrared-reflective black pigment and the intermediate layer contains a black pigment, was a leather-like sheet having a dark colored surface having the value of L* ≦30 and was highly detectable by a LIDAR sensor. On the other hand, each of the leather-like sheets in Comparative Examples 1, 3, 4, and 6, which did not contain 3 g/m² or more of an infrared-reflective black pigment in the skin layer, had insufficient detectability by a LIDAR sensor. In addition, the leather-like sheet, which is the artificial leather in Comparative Example 2, in which the skin layer contains 3 g/m² or more of an infrared-reflective black pigment but the intermediate layer does not contain a black pigment, was not able to obtain a dark-colored surface having the value of L* ≦30. Further, the leather-like sheet, which is the artificial leather in Comparative Example 5, in which the skin layer contains carbon black together with 3 g/m² or more of an infrared-reflective black pigment and the intermediate layer contains no black pigments, was obtained with a dark color having the value L* of ≦30, but the detectability by a LIDAR sensor was insufficient because carbon black absorbed near-infrared rays. Further, the leather -like sheet in Comparative Example 7, which is an artificial leather in which the skin layer contains a perylene-based black pigment and the intermediate layer contains a black pigment, was obtained with a dark color having the value of L*≦30, but since the skin layer easily transmits near-infrared rays, the detectability by LIDAR sensors were insufficient. Further, the leather-like sheet in Comparative Example 8, in which the skin layer contained a perylene-based black pigment and the intermediate layer contained an infrared-reflective black pigment, had good detectability by a LIDAR sensor, but a dark-colored surface having the value of L*≦30 could not be obtained.

### [Reference Signs List]

- 1.: Fiber base material
- 2.: Porous layer
- 3.: Intermediate layer
- 4.: Skin layer
- 5.: Colored resin layer
- 6.: Adhesive layer
- 10: Leather-like sheet

## Claims

1. A leather-like sheet comprising a fiber base material and a colored resin layer laminated on the fiber base material,
wherein the colored resin layer comprises an intermediate layer and a skin layer laminated on the intermediate layer,
the skin layer is a layer containing polyurethane and 3 g/m² or more of an infrared-reflective black pigment,
the intermediate layer is a layer containing polyurethane and a black pigment, and
the leather-like sheet has a surface having a lightness value of L*≦ 30 in the L*a*b* color system.

2. The leather-like sheet according to claim 1,
wherein the reflectance with respect to a near-infrared ray of the wavelength of 905nm is 10% or more, and a reflectance with respect to a near-infrared ray of the wavelength of 1550nm is 10% or more.

3. The leather-like sheet according to claim 1 or 2,
wherein the solar reflectance in the wavelength-range from 250 to 2500nm is 10% or more on the average.

4. The leather-like sheet according to any one of claims 1 to 3,
wherein the infrared-reflective black pigment has;
a reflectance of 25% or more with respect to a near-infrared ray of the wavelength of 905nm,
a reflectance of 50% or more with respect to a near-infrared ray of the wavelength of 1550nm, and
a transmittance of less than 50% with respect to a near-infrared ray of the wavelength of 905nm.

5. The leather-like sheet according to any one of claims 1 to 4,
wherein the infrared-reflective black pigment is a titanium-based black pigment that is a CaO-TiO₂-MnO₂ base.

6. The leather-like sheet according to any one of claims 1 to 5,
wherein the skin layer contains 0 to 0.5 g/m² of carbon black.

7. The leather-like sheet according to any one of claims 1 to 6,
wherein a reflection intensity of the surface is 30 or more, measured at the wavelength of 905nm and the measurement distance 10 m, using a HORIZON manufactured by Livox Technology Company Limited.

8. A backpack using the leather-like sheet according to any one of claims 1 to 7 as a back surface material.
